# EUROPEAN PATENT APPLICATION

(11) **EP 4 699 761 A1**
(43) Date of publication of application: **25.02.2026**
(21) Application number: 25193053.3
(22) Date of filing: 31.07.2025
(51) Int. Cl.: B26D 7/00, B26F 1/40, B26F 1/44, F16C 3/03, F16C 33/00, F16C 29/00, B21D 28/14, B21D 28/20, B26D 5/08

(54) **ELECTRODE NOTCHING MOLD FOR SECONDARY BATTERY HAVING AUTO-BALANCE UNIT, AND AUTO-BALANCE UNIT**

(30) Priority: 22.08.2024 KR 20240112792; 06.09.2024 KR 20240121477
(71) Applicant: GSPCompany Co., Ltd., Cheonan-si, Chungcheongnam-do 31026 (KR)
(72) Inventor: WOO, Sun Hark, 31026 Chungcheongnam-do (KR)
(74) Representative: Acapo Onsagers AS

(57) **Abstract**

Provided is an electrode notching mold for a secondary battery having an auto-balance unit. The electrode notching mold for the secondary battery having the auto-balance unit includes a cover portion including an upper plate and a lower plate, a mold portion having a film, a plurality of ascending-descending portions, a plurality of guide portions, and a pressing portion, and also, a plurality of auto-balance units connected to a spherical bearing on the central axis is coupled to an upper body and a lower body and performs a function of alleviating vibration.

## Description

### CROSS-REFERENCE TO RELATED APPLICATIONS

This application claims the benefit of Korean Patent Application No. 10-2024-0112792, filed on August 22, 2024, and Korean Patent Application No. 10-2024-0121477, filed on September 6, 2024, in the Korean Intellectual Property Office, the entire disclosures of which are incorporated herein by reference for all purposes.

### BACKGROUND

### 1. Field of the Invention

One or more embodiments relate to an electrode notching mold for a secondary battery having an auto-balance unit, and the auto-balance unit.

### 2. Description of the Related Art

The performance and reliability of secondary batteries depend largely on the precise processing of each component that forms a battery cell. In the manufacturing process of a secondary battery, a notching process that forms an electrode tab on a pouch film is one of the most important stages and requires a high degree of precision. A notching mold precisely cuts a film to form an electrode tab at a specific position on a pouch film, and through this, an electrical connecting portion is formed.

In the prior art, a method of applying force to a notching mold using a press machine and forming an electrode tab in a specific portion of a film was used. However, when a press machine was in operation, problems such as the force transmitted to a notching mold not being evenly distributed or a position where the force of the press machine was transmitted not being accurate frequently occurred. Such a problem degrades the precision of a notching mold, resulting in a dimensional error, such as the shape of an electrode tab being formed unevenly or the position of the electrode tab deviating from the design standard. This may cause a defect in bonding with an electrode and may cause problems such as degradation of electrical performance or shortening of the life of a secondary battery.

Particularly, when the shape of an electrode tab is unevenly processed, an electrical connection with an electrode may be unstable, resulting in an increase in resistance or a disproportionate flow of current, hence degrading the efficiency of a battery. To solve this problem, technical improvements are needed to more uniformly control the force transmitted to a notching mold and to ensure that the force of a press machine is transmitted at the correct position.

The above description is information the inventor(s) acquired during the course of conceiving the present disclosure, or already possessed at the time, and was not necessarily publicly known before the present application was filed.

### SUMMARY

Embodiments provide an electrode notching mold for a secondary battery having an auto-balance unit that controls the power transmitted from a press machine more uniformly and directs the power of the press machine to an accurate position.

The technical tasks obtainable from the present disclosure are non-limited by the above-mentioned technical tasks. And, other unmentioned technical tasks may be clearly understood from the following description by those having ordinary skill in the technical field to which the present disclosure pertains.

According to an aspect, there is provided an electrode notching mold for a secondary battery having an auto-balance unit, the electrode notching mold including a cover portion including an upper plate in a plate shape in which a plurality of openings is formed and a lower plate spaced apart from and facing the upper plate, a mold portion formed in the form of a notching mold, having a film for a secondary battery pouch inside the mold portion, having an upper portion coupled to the upper plate, having a lower portion coupled to the lower plate, and having a plurality of cut portions in a blade shape in a portion forming a press-fit space formed inside the mold portion, a plurality of ascending-descending portions formed to be linearly driven and configured to ascend or descend the upper plate as a driving direction is provided between the upper plate and the lower plate perpendicular to an upper surface of the lower plate, a plurality of guide portions having a pillar shape, having one end provided in a lower body of the mold portion, and having the other end penetrating an upper body of the mold portion, a plurality of auto-balance units including an upper body coupled to the upper plate and having a central hole formed in a central axis, a lower body in a hub-flange shape coupled to a lower end of the upper body and having a bottom surface coupled to an upper end of the mold portion, a connecting portion of a hollow body protruding to penetrate the upper body and the lower body, and a spherical bearing provided in the central hole and axially coupled to the connecting portion, and a pressing portion provided in the upper plate and configured to press-fit the film to the upper surface of the lower plate while descending toward the press-fit space.

The connecting portion may be formed in a rivet shape and may have a support in which both ends are coupled to the upper plate and the mold portion, respectively, inside the connecting portion.

The support may be formed with a diameter having interference-fit tolerance with an inner diameter of the connection portion.

The plurality of auto-balance units may further include a lower fastening portion in a flange shape, which fastens between the upper body and the lower body, and an upper fastening portion in a nut shape, which fastens between the upper body and the connecting portion.

Each of the plurality of cut portions may be formed to have a width and a height smaller than that of the film and configured to cut a portion of the film, except for an electrode tab area.

The pressing portion may include a press-fit plate in contact with the film and a film support protruding from the press-fit plate in a direction of the lower plate.

The film support may have a frame shape with a height corresponding to the minimum distance between the press-fit plate and the lower plate.

Additional aspects of embodiments will be set forth in part in the description which follows and, in part, will be apparent from the description, or may be learned by practice of the disclosure.

According to embodiments, an electrode notching mold for a secondary battery having an auto-balance unit may minimize the vibration and impact by uniformly controlling the force transmitted to a device and may allow a pressing portion to be driven toward a correct position.

The effects of the electrode notching mold for the secondary battery having the auto-balance unit are not limited to the above-mentioned effects. And, other unmentioned effects may be clearly understood from the above description by those having ordinary skill in the technical field to which the present disclosure pertains.

### BRIEF DESCRIPTION OF THE DRAWINGS

These and/or other aspects, features, and advantages of the invention will become apparent and more readily appreciated from the following description of embodiments, taken in conjunction with the accompanying drawings of which:
FIG. 1 is a perspective view illustrating an electrode notching mold for a secondary battery having an auto-balance unit, according to an embodiment;
FIG. 2 is a perspective view illustrating an electrode notching mold for a secondary battery having an auto-balance unit from which an upper plate is removed, according to an embodiment; and
FIG. 3 is an exploded perspective view illustrating an auto-balance unit according to an embodiment.

### DETAILED DESCRIPTION

Hereinafter, embodiments will be described in detail with reference to the accompanying drawings. However, various alterations and modifications may be made to the embodiments. Here, the embodiments are not construed as limited to the disclosure. The embodiments should be understood to include all changes, equivalents, and replacements within the idea and the technical scope of the disclosure.

The terminology used herein is for the purpose of describing particular embodiments only and is not to be limiting of the embodiments. The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Unless otherwise defined, all terms including technical and scientific terms used herein have the same meaning as commonly understood by one of ordinary skill in the art to which the embodiments belong. It will be further understood that terms, such as those defined in commonly-used dictionaries, should be interpreted as having a meaning that is consistent with their meaning in the context of the relevant art and will not be interpreted in an idealized or overly formal sense unless expressly so defined herein.

When describing the embodiments with reference to the accompanying drawings, like reference numerals refer to like components regardless of drawing numbers and a repeated description related thereto will be omitted. In the description of embodiments, detailed description of well-known related structures or functions will be omitted when it is deemed that such description will cause ambiguous interpretation of the present disclosure.

Also, in the description of the components, terms such as first, second, A, B, (a), (b) or the like may be used herein when describing components of the present disclosure. These terms are used only for the purpose of discriminating one constituent element from another constituent element, and the nature, the sequences, or the orders of the constituent elements are not limited by the terms. It should be noted that if one component is described as being "connected," "coupled" or "joined" to another component, the former may be directly "connected," "coupled," and "joined" to the latter or "connected", "coupled", and "joined" to the latter via another component.

A component, which has the same common function as a component included in any one embodiment, will be described by using the same name in other embodiments. Unless stated otherwise, the configuration described in any one embodiment may be applied to other embodiments, and repeated descriptions will be omitted.

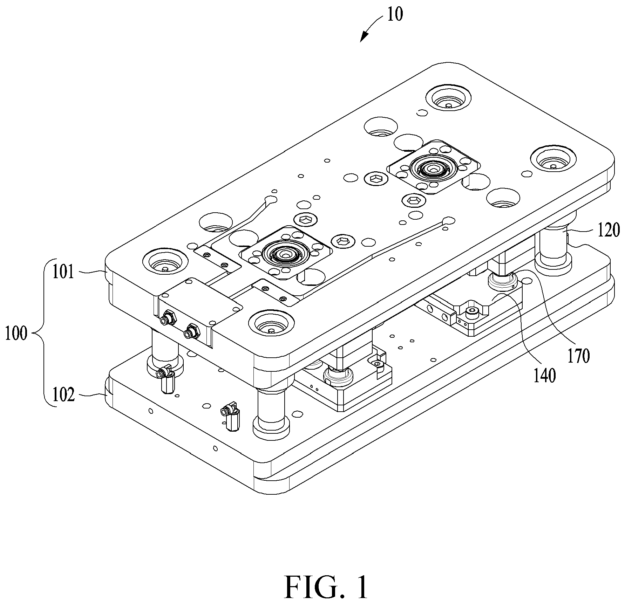

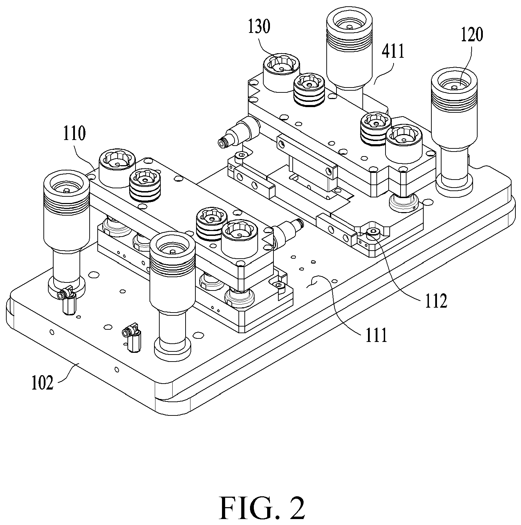

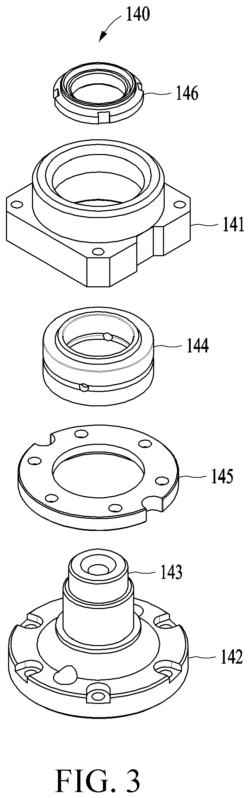

The embodiments are described with reference to the drawings below. For reference, FIG. 1 is a perspective view illustrating an electrode notching mold for a secondary battery 10 having an auto-balance unit, according to an embodiment, FIG. 2 is a perspective view illustrating the electrode notching mold for the secondary battery 10 having the auto-balance unit from which an upper plate 101 is removed, according to an embodiment, and FIG. 3 is an exploded perspective view illustrating a plurality of auto-balance units 140 according to an embodiment.

The electrode notching mold for the secondary battery 10 having the auto-balance unit may include a cover portion 100, a mold portion 110, a plurality of ascending-descending portions 120, a plurality of guide portions 130, the plurality of auto-balance units 140, and a pressing portion (not shown).

The cover portion 100 may include the upper plate 101 in a plate shape in which a plurality of openings is formed and a lower plate 102 spaced apart from and facing the upper plate 101. For example, when the lower plate 102 is placed on a shelf, the upper plate 101 may be disposed parallel to the lower plate 102, thereby forming the upper and lower structures of a mold. In the parallel-disposed state, the upper plate 101 and the lower plate 102 may each have a plurality of holes, and the holes of the upper plate 101 and the holes of the lower plate 102 may be formed at opposite positions, respectively. Accordingly, the upper plate 101 and the lower plate 102 may allow the plurality of ascending-descending portions 120 and the pressing portion (not shown) to be provided perpendicular to the upper plate 101 and the lower plate 102 without inclination, thereby increasing the processing precision.

The mold portion 110 may be formed in the form of a notching mold, have a film for a secondary battery pouch inside the mold portion 110, have an upper portion coupled to the upper plate 101, have a lower portion coupled to the lower plate 102, and have a plurality of cut portions 112 in a blade shape in a portion forming a press-fit space 111 formed inside the mold portion 110.

Here, each of the plurality of cut portions 112 may be formed to have a width and a height smaller than that of the film and may cut a portion of the film, except for an electrode tab area. For example, each of the plurality of cut portions 112 may be formed in a portion forming the press-fit space 111 in the mold portion 110 and may be spaced apart from each other with a central axis of the press-fit space 111 as a reference point. Accordingly, the plurality of cut portions 112 may have a structure in which only both ends of the film are cut through blade edges of the plurality of cut portions 112 without cutting around the central axis of the film in addition to the electrode tab area. This may be the same as the shape of a mold in which a plurality of cavities is formed in a radial direction, so it may be possible to cut a portion of both surfaces of the film in one sweep and increase work efficiency.

The plurality of ascending-descending portions 120 may be formed to be linearly driven and may ascend or descend the upper plate 101 as a driving direction is provided between the upper plate 101 and the lower plate 102 perpendicular to the upper surface of the lower plate 102. For example, the plurality of ascending-descending portions 120 may have a pillar shape and may be provided to support the upper plate 101 from the lower plate 102, thereby ascending or descending the upper plate 101. Here, the plurality of ascending-descending portions 120 may be provided at different positions and may support, through the pillar shape, the upper plate 101 in a state in which the upper plate 101 is spaced apart from the lower plate 102 by a predetermined distance.

Furthermore, the linear driving method of the plurality of ascending-descending portions 120 may be formed in a telescopic shape and may have a motor or hydraulic-type driving member, thereby ascending or descending the upper plate 101 according to the adjustable length.

The plurality of guide portions 130 may have a pillar shape, have one end provided in the lower portion of the mold portion 110, and have the other end penetrating the upper portion of the mold portion 110. This may be a configuration that allows the upper portion of the mold portion 110 to ascend or descend together with the upper plate 101, and the plurality of guide portions 130 may be formed in a telescopic shape like the plurality of ascending-descending portions 120.

Each of the plurality of auto-balance units 140 may include an upper body 141, a spherical bearing 144, a lower body 142, a connecting portion 143, a lower fastening portion 145, and an upper fastening portion 146.

The upper body 141 may be coupled to the upper plate 101 and have a central hole formed in the central axis. For example, the upper body 141 may be formed as a frame with an open central axis to have a cylindrical shape with the central hole. Here, the upper body 141 may be fastened to the upper plate 101 through a fastening member as a plurality of fastening holes is further opened in a frame portion outside the central hole. In this configuration, the upper body 141 may support the upper plate 101 as much as the coupling strength with the upper plate 101, thereby transmitting the punching force by the driving of the plurality of ascending-descending portions 120, damping the vibration by the upper plate 101 due to the punching force, and preventing a phenomenon of deviation from an ascending-descending path.

Additionally, a head 412 in a polyhedral shape may be additionally coupled to the upper end of the upper body 141. Specifically, the upper body 141 may have a predetermined protrusion 411 in a portion forming the central hole, and a corresponding hole may be formed in the head 412 so that the predetermined protrusion 411 may be inserted into the head 412.

The lower body 142 may have a hub-flange shape and may be coupled to the lower end of the upper body 141, and the bottom surface may be coupled to the upper end of the mold portion 110. This may be to ensure that the driving force of the plurality of ascending-descending portions 120 is transmitted to the mold portion 110 at the same time as the lower body 142 supports the upper body 141, increasing the operational stability of the upper plate 101 through the support of the upper body 141, and here, the processing accuracy of the mold portion 110 may be guaranteed by dispersing the driving force. Here, the lower body 142 may also be coupled to the mold portion 110 by opening a plurality of fastening holes outside a flange hole (not shown). For reference, the positions where the upper body 141 and the lower body 142 are coupled to the respective plates are not limited to the drawing, and the configuration currently illustrated in the drawing is merely an example of a description. Through this, the plurality of auto-balance units 140 may have a positional degree of freedom and may play a role in various positions.

The connecting portion 143 may have a hollow body protruding to penetrate the upper body 141 and the lower body 142. For example, the connecting portion 143 may have a height higher than the coupling of the upper body 141 and the lower body 142, thereby penetrating the central hole of the upper body 141 together with the flange hole (not shown) of the lower body 142. In this configuration, the connecting portion 143 may assist the mechanical connection of the two bodies and support, inside the two bodies, the vibration and impact transmitted to the two bodies.

The spherical bearing 144 may be provided in the central hole and be axially coupled to the connecting portion 143. For example, the spherical bearing 144 may be formed with a diameter corresponding to the inner diameter of the central hole and the outer diameter of the connecting portion 143, thereby filling a space between the central hole and the connecting portion 143. The inner diameter of the journal of the spherical bearing 144 may correspond to the outer diameter of the connecting portion 143 so that the connecting portion 143 may be engaged with the spherical bearing 144.

The lower fastening portion 145 may be formed in a flange shape that fastens between the upper body 141 and the lower body 142. For example, the lower fastening portion 145 may be provided such that the fastening holes face the upper body 141 and the lower body 142 and may be fastened through the fastening member, thereby fastening the bottom surface of the upper body 141 to the upper portion of the lower body 142.

The upper fastening portion 146 may be formed in a nut shape that fastens between the upper body 141 and the connecting portion 143. For example, the upper fastening portion 146 may have an inner diameter of a nut body corresponding to the outer diameter of the connecting portion 143 and have an outer diameter of the nut body corresponding to the inner diameter of the central hole, thereby fastening between the connecting portion 143 and the upper body 141 with the strength according to the tightened force.

Furthermore, the material of the plurality of auto-balance units 140 may be formed of a high-strength metal alloy. For example, the plurality of auto-balance units 140 may be formed of stainless steel or titanium alloy. These materials may be resistant to the strong force and high temperature generated during the operation of a mechanical device and be resistant to corrosion, extending the life of a device.

The pressing portion (not shown) may be provided in the upper plate 101 and may press-fit the film to the upper surface of the lower plate 102 while descending toward the press-fit space 111. For reference, various forms capable of press-fitting the film may be applied to the pressing method used in the present disclosure, so a specific drawing of the pressing portion is omitted.

More specifically, the pressing portion (not shown) may include a press-fit plate in contact with the film and a film support protruding from the press-fit plate in the direction of the lower plate 102.

For example, the pressing portion (not shown) may have a plurality of supports formed at the same height and have the press-fit plate with a flat cross-section of a circle or square in the end portions of the plurality of supports, thereby causing both ends of the film to be cut by the cutting edges of the plurality of cut portions 112 forming the press-fit space 111 as the descending press-fit plate reaches the lower plate 102.

The film support may have a frame shape with a height corresponding to the minimum distance between the press-fit plate and the lower plate 102. This may be a configuration in which the film support fixes the film in an area where the plurality of cut portions 112 is not involved in the press-fit space 111, so the film support press-fits the lower plate 102 together with the film at the corresponding position, thereby preventing the central axis portion of the film from wrinkling by the force generated when both ends of the film are cut, thereby increasing the processing precision.

Furthermore, an example of a description of the plurality of auto-balance units 140 in another independent claim is as follows, and redundant descriptions are omitted.

The plurality of auto-balance units 140 may include the upper body 141, the lower body 142, the connecting portion 143, the spherical bearing 144, the lower fastening portion 145, and the upper fastening portion 146.

The upper body 141 may have the central hole formed in the central axis and be coupled to the upper portion of the electrode notching mold for the secondary battery 10.

The lower body 142 may be coupled to the lower end of the upper body 141 and have a hub-flange shape in which the bottom surface is coupled to the lower portion of the electrode notching mold for the secondary battery 10.

The connecting portion 143 may have a hollow body protruding to penetrate the upper body 141 and the lower body 142.

The spherical bearing 144 may be provided in the central hole and be axially coupled to the connecting portion 143.

The lower fastening portion 145 may be formed in a flange shape that fastens between the upper body 141 and the lower body 142, and the upper fastening portion 146 may be formed in a nut shape that fastens between the upper body 141 and the connecting portion 143.

In the embodiments, the electrode notching mold for the secondary battery 10 having the auto-balance unit may minimize the vibration and impact by uniformly controlling the force transmitted to a device and may allow the pressing portion (not shown) to be driven toward an accurate position.

While the embodiments are described with reference to drawings, it will be apparent to one of ordinary skill in the art that various alterations and modifications in form and details may be made in these embodiments without departing from the spirit and scope of the claims and their equivalents. For example, suitable results may be achieved if the described techniques are performed in a different order, and/or if components in a described system, architecture, device, or circuit are combined in a different manner, and/or rearranged or supplemented by other components or their equivalents.

Therefore, other implementations, other embodiments, and equivalents to the claims are also within the scope of the following claims.

## Claims

1. An electrode notching mold for a secondary battery having an auto-balance unit, the electrode notching mold comprising:
a cover portion comprising an upper plate in a plate shape in which a plurality of openings is formed and a lower plate spaced apart from and facing the upper plate;
a mold portion formed in the form of a notching mold, having a film for a secondary battery pouch inside the mold portion, having an upper portion coupled to the upper plate, having a lower portion coupled to the lower plate, and having a plurality of cut portions in a blade shape in a portion forming a press-fit space formed inside the mold portion;
a plurality of ascending-descending portions formed to be linearly driven and configured to ascend or descend the upper plate as a driving direction is provided between the upper plate and the lower plate perpendicular to an upper surface of the lower plate;
a plurality of guide portions having a pillar shape, having one end provided in a lower body of the mold portion, and having another end penetrating an upper body of the mold portion;
a plurality of auto-balance units comprising an upper body coupled to the upper plate and having a central hole formed in a central axis, a lower body in a hub-flange shape coupled to a lower end of the upper body and having a bottom surface coupled to an upper end of the mold portion, a connecting portion of a hollow body protruding to penetrate the upper body and the lower body, and a spherical bearing provided in the central hole and axially coupled to the connecting portion; and
a pressing portion provided in the upper plate and configured to press-fit the film to the upper surface of the lower plate while descending toward the press-fit space.

2. The electrode notching mold of claim 1, wherein the plurality of auto-balance units further comprises a lower fastening portion in a flange shape, which fastens between the upper body and the lower body, and an upper fastening portion in a nut shape, which fastens between the upper body and the connecting portion.

3. The electrode notching mold of claim 1, wherein each of the plurality of cut portions is formed to have a width and a height smaller than that of the film and configured to cut a portion of the film, except for an electrode tab area.

4. The electrode notching mold of claim 1, wherein the pressing portion comprises a press-fit plate in contact with the film and a film support protruding from the press-fit plate in a direction of the lower plate.

5. The electrode notching mold of claim 4, wherein the film support has a frame shape with a height corresponding to a minimum distance between the press-fit plate and the lower plate.

6. An auto-balance unit comprising:
an upper body having a central hole formed in a central axis and coupled to an upper portion of an electrode notching mold for a secondary battery;
a lower body in a hub-flange shape coupled to a lower end of the upper body and having a bottom surface coupled to a lower portion of the electrode notching mold for the secondary battery;
a connecting portion of a hollow body protruding to penetrate the upper body and the lower body; and
a spherical bearing provided in the central hole and axially coupled to the connecting portion.

7. The auto-balance unit of claim 6, further comprising:
a lower fastening portion in a flange shape, which fastens between the upper body and the lower body, and an upper fastening portion in a nut shape, which fastens between the upper body and the connecting portion.
